# EUROPÄISCHE PATENTANMELDUNG

(11) **EP 1 710 433 A2**
(43) Veröffentlichungstag der Anmeldung: **11.10.2006**
(21) Anmeldenummer: 06015264.2
(22) Anmeldetag: 19.11.2003
(51) Int. Cl.: F03G 3/08, A47L 13/60, A47L 13/48, A47L 13/256

(54) **Schwungmassenantrieb**

(30) Priorität: 02.12.2002 DE 10256091
(62) Teilanmeldung aus: 03773716.0
(71) Anmelder: BSH Bosch und Siemens Hausgeräte GmbH, 81739 München (DE)
(72) Erfinder: Damrath, Joachim, Dr., 89429 Bachhagel (DE); Spielmannleitner, Markus, 73479 Ellwangen (DE); Wetzl, Gerhard, 89567 Sontheim (DE)

(57) **Zusammenfassung**

Die Erfindung betrifft eine motorisch bewegbare Vorrichtung mit einem neuen Schwungmassenantrieb, der durch Schwungmassenbewegungen und dadurch erzeugte Trägheitskräfte in bestimmten Phasen eine Haftreibung zwischen der Vorrichtung und einer Transportoberfläche überwindet und in anderen Phasen die Schwungmassenbewegungen zurückführen kann, ohne dass die Haftreibung überwunden wird. Die Erfindung betrifft außerdem eine Anlage zum Behandeln eines Bodens mit einer solchen Vorrichtung sowie ein Verfahren zum Bewegen einer solchen Vorrichtung.

## Beschreibung

Die vorliegende Erfindung bezieht sich auf eine motorisch angetriebene Vorrichtung mit einem Antrieb mit einer Schwungmasse, welche Vorrichtung sich mit Hilfe des Antriebs über eine Oberfläche bewegen kann, eine Anlage zum Behandeln eines Bodens mit einer solchen Vorrichtung sowie ein Verfahren zum Bewegen einer solchen Vorrichtung.

Dabei kann es sich um Vorrichtungen verschiedenster Natur handeln. Die Erfindung hat vor allem die Ausbildung des Antriebs zum Gegenstand. Beispielsweise könnte es sich um ein Fahrzeug, ein Werkzeug oder anderes handeln. Bevorzugt richtet sich die Erfindung jedoch auf eine Vorrichtung zum Behandeln, insbesondere Reinigen und/oder Wischen, von Oberflächen. Beispielsweise kann es sich bei der erfindungsgemäßen Vorrichtung um eine motorisch angetriebene Wischvorrichtung zum automatischen und motorischen Reinigen von Innenraumfußböden handeln.

Aus der DE 20 56 355 A geht ein Antrieb für ein Fahrzeug hervor, bei welchem Antrieb eine Impulsmasse mit hoher Impulsfolge schnell vor und langsam zurück bewegt wird, so dass bei der schnellen Vorbewegung der hierbei entstehende Impuls das Fahrzeug in gleicher oder entgegen gesetzter Richtung weiterbewegt. Dabei verhindern Reibungskräfte eine Rückbewegung des Fahrzeugs in seine Ausgangsstellung.

Das der Erfindung zugrunde liegende technische Problem ist, eine durch einen Antrieb bewegbare Vorrichtung mit einem verbesserten Antrieb anzugeben.

Die Erfindung richtet sich auf eine Vorrichtung mit einer Basis und einem Antrieb zum Bewegen der Vorrichtung über eine Oberfläche, welche Vorrichtung dadurch gekennzeichnet, dass der Antrieb eine relativ zu der Basis bewegbare und motorisch angetriebene Schwungmasse aufweist und dazu ausgelegt ist, die Vorrichtung durch Bewegen der Schwungmasse relativ zu der Basis anzutreiben, indem bei einem Teil dieser Bewegungen eine die Vorrichtung auf der Oberfläche haltende Haftreibung durch Massenträgheit der Schwungmasse überwunden wird und bei einem anderen Teil dieser Bewegungen nicht, wobei die Bewegungen der Schwungmasse relativ zu der Basis insgesamt iterativ sind.

Bevorzugte Ausgestaltungen der Erfindung sind in den abhängigen Ansprüchen und in der folgenden Beschreibung dargestellt. Die Erfindung richtet sich auch auf ein Verfahren zum Wischen von Fußböden. In der folgenden Beschreibung wird allerdings zwischen dem Vorrichtungsaspekt und dem Verfahrensaspekt der Erfindung nicht im Einzelnen unterschieden, so dass die gesamte Offenbarung im Hinblick auf beide Kategorien zu verstehen ist.

Die erfindungsgemäße Vorrichtung zeichnet sich durch einen neuartigen Schwungmassenantrieb aus. Dabei werden Massenträgheitskräfte ausgenutzt, die durch Relativbewegungen zwischen einer Schwungmasse und einer gewissermaßen den festen Bestandteil der Vorrichtung bildenden Basis entstehen. Diese Massenträgheitskräfte führen in bestimmten Phasen dazu, dass eine die Vorrichtung auf der Oberfläche, auf der sie sich bewegen soll, haltende Haftreibung überwunden wird. In anderen Phasen sollen die Massenträgheitskräfte jedoch die Haftreibung nicht überwinden. Im Folgenden soll vereinfacht von Bewegungsphasen und Haftphasen gesprochen werden. Je nach Bezugssystem werden also durch die Bewegungen der Schwungmasse Trägheitskräfte auf die Basis übertragen, die diese teils bewegen und teils auf der Oberfläche haften lassen. Anders ausgedrückt führen die Bewegungen der Schwungmasse zu einer Reaktion der Basis, weil das Gesamtsystem bemüht ist, der Impulserhaltung zu entsprechen. Die Impulserhaltung wird jedoch durch die Reibung zwischen der Vorrichtung und der Oberfläche gestört. In den Haftphasen bleibt die Basis auf der Oberfläche, in den Bewegungsphasen führt sie eine Bewegung auf der Oberfläche durch. Vorzugsweise handelt es sich dabei um eine gleitende oder rutschende Bewegung, bei entsprechender Haftreibung in Radlagern oder zwischen Radflächen und der Oberfläche könnte es sich während der Bewegungsphasen jedoch auch um eine abrollende Bewegung handeln.

Indem die Bewegungen der Schwungmasse gegenüber der Basis letztlich iterativ sind, sich also wiederholen und damit eine fortgesetzte Bewegung ermöglichen, ist insgesamt ein Antriebskonzept geschaffen, dass keinen direkten Formschluss oder Kraftschluss zwischen Antriebsteilen und der Oberfläche erfordert, auf der sich die Vorrichtung bewegen soll.

Vorzugsweise liegt die Vorrichtung auf einer im Wesentlichen horizontalen Oberfläche auf; die Erfindung ist jedoch nicht hierauf eingeschränkt. Zur Klarstellung sei noch darauf hingewiesen, dass die Schwungmasse Vorrichtungsbestandteil ist und durch das erfindungsgemäße Antriebskonzept nicht etwa verbraucht werden soll. Es wird zwar eine Energieeinkopplung zur Erzeugung der Bewegung notwendig sein, jedoch soll die Schwungmasse als solche im Gegensatz zu Rückstoßantrieben wie beispielsweise Raketenantrieben oder Düsenantrieben erhalten bleiben.

Damit ermöglicht die Erfindung eine gleitende oder rollende Fortbewegung ohne Kopplung zwischen Antrieb und Transportoberfläche. Dies kann beispielsweise von Interesse sein, wenn ein Formschluss oder Kraftschluss mit der Transportoberfläche nur schwer hergestellt werden kann, etwa auf ganz glatten Oberflächen, oder wenn eine Berührung zwischen Antrieb und Oberfläche aus anderen Gründen nicht erwünscht ist, etwa bei der im Folgenden noch näher erläuterten erfindungsgemäßen Reinigungsvorrichtung.

Es gibt verschiedene grundsätzliche Möglichkeiten der Art der Bewegung zwischen der Schwungmasse und der Basis. Zum einen sind lineare Bewegungen denkbar, bei denen die Schwungmasse also iterativ hin und her bewegt wird. Durch entsprechend kräftige Beschleunigungen oder Verzögerungen können dabei Trägheitskräfte erzeugt werden, die über einer durch die Haftreibung bestimmten Schwelle liegen. Bei kleineren Beschleunigungen und Verzögerungen bleibt die Vorrichtung innerhalb der Haftreibungsgrenzen, so dass die Schwungmasse zugunsten einer neuen Bewegungsphase der Vorrichtung wieder zurückgeführt werden kann.

Es kann in diesem Zusammenhang insbesondere von Interesse sein, zusätzlich zu dem eigentlichen motorischen Antrieb der Schwungmasse einen Energiespeicher, insbesondere eine mechanische Feder vorzusehen, die während der linearen Bewegungen der Schwungmasse synchron zu diesen Bewegungen mit Energie be- und entladen wird. Zum einen können dadurch zumindest Teile der durch den motorischen Antrieb aufgewendeten Energie zurückgewonnen werden. Zum Zweiten kann beispielsweise die zur Überwindung der Haftreibung vorgesehene Beschleunigungsphase mit entsprechend großen Kräften durch den Energiespeicher erleichtert werden und der motorische Antrieb selbst nur zur Rückführung dienen. So könnte der Antrieb die Schwungmasse gegen die Federkraft drücken und dabei die Feder spannen, woraufhin der Antrieb weggeschaltet und es der Feder erlaubt wird, die Schwungmasse relativ heftig zu beschleunigen.

Weiterhin sind aber auch rotatorische Bewegungen zwischen der Schwungmasse und der Basis möglich. Bevorzugt sind dabei kreisförmige Bewegungen. Bei den rotatorischen und insbesondere bei den kreisförmigen Bewegungen sind zwei Fällen denkbar, die im Prinzip auch gemischt auftreten könnten. Zum einen kann die eigentliche lmpulserhaltung im Sinne des linearen Impulses, also im Sinne der Zentrifugalkräfte, ausgenutzt werden. Zum Zweiten kann aber auch die Drehimpulserhaltung ausgenutzt werden, bei der die Basis einen Drehimpuls erfährt, wenn der Drehimpuls der Schwungmasse geändert wird. Wenn der Fall der linearen Impulserhaltung im Vordergrund steht, wird die Schwungmasse bezüglich der rotatorischen Bewegung exzentrisch angeordnet sein. Wenn die Drehimpulserhaltung im Vordergrund steht, wird die Schwungmasse im Bezug auf die rotatorische Eigendrehung konzentrisch liegen. Hierbei ist jeweils die Schwungmasse im Sinne des Schwerpunktes und nicht notwendigerweise in ihrer körperlichen Form gemeint. Im erstgenannten Fall könnte also beispielsweise eine erhöhte Beschleunigung der Schwungmasse in bestimmten Bahnbereichen, etwa bei nicht-kreisförmigen Bahnen wie Sonnenradbahnen oder Planetenradbahnen ausgenutzt werden, im zweiten Fall dagegen beispielsweise bei Richtungsänderung einer konzentrischen Rotation der Schwungmasse der auf die Basis wirkende Drehimpuls. In beiden Fällen kann anschaulich gesprochen ein "Ruck" der Basis erzeugt werden, der für eine bestimmte Bewegungsphase die Haftreibung überwindet.

Es ist bei der Erfindung übrigens nicht unbedingt notwendig, wenngleich bevorzugt, dass die Bewegungsphasen, also die durch den Schwungmassen erzeugten "Ruckbewegungen der Basis" immer im Wesentlichen gleichgerichtet (einschließlich gleichgerichtet im Sinne von Drehbewegungen) sind. Im Prinzip sind auch Fälle denkbar, in denen die Haftreibung auch im Rahmen von "Rückschritten" überwunden wird, die jedoch insgesamt zu einer geringeren Zurückbewegung als der gewünschten Vorbewegung führen. Beispielsweise könnte also der Schwungmassenantrieb auch bei im Grunde in der falschen Richtung wirksamen Trägheitskräften kurz die Haftreibungsgrenze überwinden. Wenn die Haftreibungsgrenze in der gewünschten Richtung zeitlich länger oder mit einer größeren Geschwindigkeit überwunden wird, steht dies im Prinzip nicht einer erfindungsgemäßen Fortbewegung im Weg.

Besonders bevorzugt ist insbesondere auch, Komponenten der ausgenutzten Trägheitskräfte dazu zu verwenden, die Haftreibung zwischen der Vorrichtung und der Oberfläche, auf der sie sich bewegen soll, auszunutzen. Durch entsprechende Auslegung der Bewegungen, insbesondere deren Neigung, kann die Vorrichtung nämlich zeitweise und eventuell auch stellenweise schwerer oder leichter werden, genau gesagt also durch entsprechende Trägheitskräfte auf die Oberfläche gedrückt oder in der Schwerkraft entlastet werden. Dadurch ist es zusätzlich oder alternativ zu der bereits erwähnten Verwendung von besonders großen Trägheitskräften in bestimmten Bewegungsphasen möglich, zwischen Bewegungsphasen und Haftphasen zu unterscheiden. Beispielsweise können betragsmäßig konstant bleibende Trägheitskräfte in den Bewegungsphasen durch der Gravitationskraft entgegengesetzte Komponenten zu einem Gleiten und im Prinzip auch Springen der Vorrichtung führen und in Haftphasen durch parallel zu der Gravitationskraft wirkende Komponenten zu einem Haftenbleiben. Das Gleiten ist gegenüber dem (denkbaren) Springen allerdings bevorzugt.

Besonders bevorzugt ist die Verwendung von zumindest zwei Schwungmassen im obigen Sinn. Dies erlaubt zusätzlich zu den erwähnten Aspekten eine geschickte Kombination der jeweiligen Trägheitskräfte und phasenweise Addition bzw. Kompensation. Beispielsweise können sich zwei kreisförmig bewegte Schwungmassen mit exzentrischem Schwerpunkt gegenläufig und synchron bewegen, so dass sich ihre Trägheitskräfte zweimal pro Volldrehung kompensieren und zweimal pro Volldrehung addieren. Durch zusätzliche Verkippung der Drehungsebenen können in den Phasen der Addition in einem Fall gravitationsparallele und im anderen Fall gravitationsantiparallele Trägheitskraftkomponenten erzeugt werden, so dass sich die Vorrichtung nur oder zumindest stärker im letztgenannten Fall ruckartig bewegt.

Vorzugsweise sind die Schwungmassen bei rotatorischen Komponenten kardanisch an der Basis aufgehängt. Dies kann zur Verkippung der Rotationsebenen in dem eben beschriebenen Sinn dienen. Ferner kann durch entsprechende Einstellung der kardanischen Aufhängungen im Gegensatz zu einer festen unveränderlichen Verkippung auch eine Abstimmung auf die Größe der Haftreibung zwischen der Vorrichtung und der Oberfläche und zudem auch eine eventuell notwendige Kompensation von Richtungsabhängigkeiten dieser Haftreibung beispielsweise bei ausgerichteten Wischtextilien erfolgen. Die Einstellung der kardanischen Aufhängung erfolgt vorzugsweise motorisch und kann dabei insbesondere auch automatisch geschehen, indem die Vorrichtung gewissermaßen den Beginn der Bewegungsphase austestet und sich bei gegebenen Rotationsbewegungen durch Anpassung der Verkippung selbsttätig auf einen optimalen Vortrieb einstellt.

Im Fall eines Schwungmassenantriebs durch Ausnutzung der linearen Impulserhaltung, also auch der Zentrifugalkräfte, ist es bevorzugt, dass sich die Vorrichtung über der Oberfläche schrittweise mit - bei angestrebter gerader Bewegung der Vorrichtung - translatorischen Einzelschritten bewegt. Im Gegensatz dazu ist es bei der Ausnutzung der Drehimpulserhaltung vorgesehen, eine auf die Basis wirkende Drehimpulskomponente dadurch auszunutzen, dass gewissermaßen ein Ende der Vorrichtung als Drehachse dient, und zwar indem es durch eine oberflächenparallele auf die Basis wirkende Drehimpulskomponente "beschwert" wird. Beim nächsten Schritt kann ein entgegengesetztes Ende der Vorrichtung als Drehachse dienen und ein entgegengesetzt gerichteter und auf die Basis wirkender Drehimpuls, d. h. eine zu der Oberfläche senkrecht stehende Komponente, für einen entsprechenden zweiten Schritt verwendet werden. Die Vorrichtung würde sich in diesem Fall also beispielsweise mit einer rechten und einer linken Seite alternierend schrittweise und dabei jeweils um die andere Seite drehend fortbewegen. Die Drehimpulskomponenten können entweder durch Verkippen rotierender Kreisel oder aber - weniger bevorzugt - durch Beschleunigen oder Abbremsen solcher Kreisel erzeugt werden.

Übrigens muss die erfindungsgemäße Vorrichtung nicht notwendigerweise frei von anderen Antrieb- oder Lenkeinflüssen sein. Beispielsweise im Fall der bevorzugten Anwendung als Reinigungsvorrichtung kann es auch erwünscht sein, eine Einflussnahme einer Bedienungsperson auf die Bewegung beispielsweise durch Anbringen eines Stils zum Lenken oder auch zum Unterstützen der Bewegung vorzusehen. Ein motorisch angetriebener Wischmob mit Stil würde es einer Reinigungsperson einerseits erleichtern, den Wischmob über die zu reinigende Oberfläche zu schieben, andererseits könnte der Wischmob dabei zusätzlich sehr viel schwerer und damit bezüglich der Reinigungswirkung effektiver sein als ein konventioneller manuell zu betätigender Wischmob. Bevorzugt ist allerdings eine autark und automatisch bewegte Reinigungsvorrichtung mit dem geschilderten Schwungmassenantrieb.

Die Erfindung richtet sich insbesondere auf eine Vorrichtung zum Wischen von flachen Oberflächen mit dem beschriebenen motorischen Antrieb und einer Wischfläche, bei der der Antrieb bei einer Bewegung der Vorrichtung durch den Antrieb innerhalb einer durch die Wischfläche erfassten Bahnbreite liegt.

Bei der erfindungsgemäßen Ausgestaltung ist also der Antrieb innerhalb einer durch das Wischen erfassten Bahnbreite angeordnet. Dies bedeutet insbesondere, dass der Antrieb nicht außerhalb der beim Wischen erfassten Bahnbreite stört, wenn beispielsweise knapp entlang einer Bodenkante gewischt werden soll. Die Erfindung ermöglicht hier, mit der Wischfläche in einen relativ geringen Abstand zu dieser Kante zu kommen oder ganz ohne solchen Abstand zu wischen, weil der Antrieb, etwa ein zwischen der durch das Wischen erfassten Bahnbreite und dem Bodenrand laufendes Rad als Antriebsteil, innerhalb der erfassten Bahnbreite angeordnet ist.

Die Erfindung richtet sich insbesondere auf das Wischen von zumindest ungefähr horizontalen Oberflächen, also solchen, auf denen die Wischvorrichtung während ihrer Fortbewegung durch die Schwerkraft gehalten bleibt. Dabei wird der Antrieb zu einem wesentlichen Teil oberhalb der zu wischenden Oberfläche liegen. Insbesondere ist der Antrieb vorzugsweise über der Wischfläche angeordnet, er kann jedoch in der Bewegungsrichtung im Prinzip auch vor oder hinter der Wischfläche angeordnet sein, solange er in der Bahnbreite bleibt.

Damit bietet die Erfindung auch die Möglichkeit, im Verhältnis zu der wesentlich auch durch den Antrieb bestimmten Baugröße der Vorrichtung eine relativ breite Wischfläche vorzusehen.

Vorzugsweise hat die erfindungsgemäße Wischvorrichtung schmale und lange Außenabmessungen im Sinn einer Projektion auf die zu wischende Oberfläche, also eine deutlich größere Ausdehnung in einer Richtung als in einer dazu senkrechten zweiten Richtung. Das Zahlenverhältnis der Abmessungen der längsten und der schmalsten Seite beträgt vorzugsweise zumindest 2 : 1, besser noch zumindest 2,5 : 1 und im günstigsten Fall zumindest 3 : 1. Eine bevorzugte Grundform der Vorrichtung in der Projektion auf die zu wischende Oberfläche ist ein schmales langes Rechteck. Schmale lange Außenabmessungen erlauben einerseits eine relativ große Bahnbreite bei andererseits insgesamt nicht zu großer Vorrichtung. Insbesondere kann die Vorrichtung beim Hindurchfahren durch schmale Durchgänge oder beim Auswischen von schmalen Ecken sehr flexibel eingesetzt werden.

Bevorzugt ist ferner, dass die genannten Außenabmessungen der Vorrichtung durch die Wischfläche bedingt sind, die Wischfläche also in der Ebene der zu wischenden Oberfläche die Ränder der Vorrichtung bildet oder diesen zumindest im Wesentlichen entspricht. Dabei kann optional vorgesehen sein, dass die Wischfläche, also etwa ein austauschbarer Wischbezug, an einer oder mehreren Seiten über übrige Teile der Vorrichtung übersteht und damit zum einen ein besonders gutes Auswischen entlang Bodenkanten ermöglicht und zum Zweiten eine schützende Anstoßkante bildet. Natürlich können auch andere Anstoßkanten vorgesehen sein, die nicht durch die Wischfläche selbst gebildet sind. Insbesondere können auch mit sensorischen Eigenschaften ausgestattete Anstoßkanten vorgesehen sein, um eine automatische Steuerung der Wischvorrichtung auf ein Anstoßen an einem Hindernis hinzuweisen und damit entsprechende Steuerungsreaktionen hervorzurufen.

Die Wischvorrichtung bewegt sich im Betrieb vorzugsweise so vorwärts, dass während einer Wischfahrt ein und dieselbe Längsseite nach vorne zeigt. Es wird dann also mit der maximal möglichen Bahnbreite gewischt und andererseits der beim Reinigen zusammengeschobene Schmutz vor sich hergeschoben. Dies gilt vorzugsweise auch bei und nach Kurvenfahrten, so dass die Wischvorrichtung keine Wischstreifen in Ecken oder Kurven hinterlässt. Insbesondere kann die Wischvorrichtung in einer beispielsweise rechtwinkligen Ecke eines Fußbodens zunächst mit der genannten Längsseite bis zum Anschlag an die gegenüberliegende Kante fahren, dann zurückfahren, sich um 90° im Sinne der zukünftigen Fahrtrichtung drehen (so dass die beschriebene Längsseite nun in der zukünftigen Fahrtrichtung nach vorne zeigt), in dieser gedrehten Lage an der Kante entlang wieder bis in die Ecke fahren, um dann aus der Ecke heraus in der neuen Fahrtrichtung weiterzufahren. Dabei wäre eine Fahrt mit vorne liegender Längsseite in die Ecke hinein übergeführt in eine Fahrt mit derselben vorne liegenden Längsseite aus der Ecke hinaus in der neuen Bewegungsrichtung.

Ferner kann vorgesehen sein, dass sich die Wischfläche im Betrieb gegenüber der übrigen Vorrichtung oszillierend bewegt, beispielsweise gegenüber einer Basis der Vorrichtung in einer oder auch in zwei horizontalen oder vertikalen Richtungen schwingt oder kreist. Damit kann die mechanische Einwirkung auf den Boden erhöht werden, ohne dieselbe Bahn mehrfach überfahren zu müssen.

Dies kann in Zusammenhang mit dem bereits erläuterten Möglichkeiten von kleineren Rückschritten während der erfindungsgemäßen Bewegung durch Schwungmassenantrieb der Fall sein. Indem während der eigentlich angestrebten Bewegung auch in rückwärts oder seitwärts gerichteten Bewegungen für eine gewisse Phase die Haftreibung überwunden wird, lässt sich eine mechanische Verstärkung der Wischwirkung erzielen. Dadurch können quasi oszillierende (und dabei nicht notwendigerweise kontinuierliche) Bewegungen erzielt werden.

Eine weitere Ausgestaltung der Erfindung sieht vor, die Wischvorrichtung nicht nur auf einer Seite, sondern auf zwei entgegengesetzten Seiten mit einer Wischfläche auszustatten. Die Vorrichtung kann dann durch Eingriff einer Benutzerperson oder selbsttätig gewendet werden, um mit der zweiten Wischfläche weiterfahren zu können.

Im Übrigen ist bevorzugt, dass die Wischfläche durchgehend ist, also eine im mathematischen Sinn zusammenhängende Fläche bildet. Dabei kann insbesondere erzielt werden, dass die Wischvorrichtung die zu wischende Oberfläche ausschließlich mit der Wischfläche berührt, weil keine Räder, Antriebsriemen oder dergleichen eingesetzt werden müssen.

Die vorliegende Erfindung betrifft zudem eine Anlage zum Behandeln von Böden, die zum einen die motorisch angetriebene Vorrichtung aufweist, die im Folgenden als mobile Vorrichtung bezeichnet wird und die eigentliche Behandlung durchführt, und zum anderen eine Basisstation aufweist, die zum Regenerieren der mobilen Vorrichtung in bestimmten Abständen dient. Die mobile Vorrichtung bewegt sich also motorisch angetrieben über die zu behandelnde Bodenfläche und kehrt in bestimmten Abständen zu der Basisstation zurück, um regeneriert zu werden. Dabei weist die Basisstation eine motorisch angetriebene Transporteinrichtung auf, die dazu ausgelegt ist, die mobile Vorrichtung für das Regenerieren in die Basisstation hinein zu transportieren und aus der Basisstation hinaus zu transportieren.

Das zugrunde liegende Prinzip besteht also darin, die Basisstation mit einer motorischen Einrichtung zum Hinein- und Hinaustransportieren der mobilen Vorrichtung auszustatten, obwohl die mobile Vorrichtung in der beschriebenen Weise selbst motorisch angetrieben ist. Im Gegensatz zu konventionellen Anlagen, bei denen die mobile Vorrichtung sich mit Hilfe ihres Antriebs zu der Basisstation bewegt und beispielsweise an oder unter entsprechenden Anschlüssen für die Regenerierung "parkt", ist die erfindungsgemäße Basisstation mit einem eigenen motorischen Mechanismus, der Transporteinrichtung, versehen. Damit lässt sich die mobile Vorrichtung in eine bestimmte Lage bringen, ohne dass hinsichtlich der baulichen Ausgestaltung der Basisstation und der baulichen Ausgestaltung der mobilen Vorrichtung und ihres Antriebs selbst darauf Rücksicht genommen werden müsste, dass die mobile Vorrichtung mit Hilfe ihres eigenen Antriebs in die geeignete Position gelangen können muss. Beispielsweise kann die Transporteinrichtung der erfindungsgemäßen Basisstation die mobile Vorrichtung auch anheben, wozu deren Antrieb im Regelfall nicht im Stande sein wird. Im Übrigen kann die Transporteinrichtung in der Basisstation, wenn gewünscht oder erforderlich, relativ große Kräfte aufbringen, die der motorische Antrieb der mobilen Vorrichtung, die ja beispielsweise von einem elektrischen Akku oder dergleichen versorgt wird, nicht oder nur bei einer im Übrigen nicht notwendigen großzügigen Auslegung dieses Antriebs, aufbringen kann.

Vorzugsweise weist die mobile Vorrichtung ein Wischtextü auf, mit dem sie den Boden zum Reinigen oder aus anderen Gründen wischt. Das Regenerieren beinhaltet dann vorzugsweise das Reinigen des Wischtextils oder das Austauschen des Wischtextils gegen ein gereinigtes oder ein neues Wischtextil. Der Begriff "Wischtextil" ist dabei sehr allgemein zu verstehen und kann alle möglichen faserbasierenden flächigen Erzeugnisse beinhalten, mit denen ein Boden gewischt werden kann. Es kann sich also um Vliese, Lappen, pelzartige oder papierähnliche Textilien und anderes handeln.

Die Basisstation beinhaltet bei einer Ausgestaltung der Erfindung eine schräge Ebene, auf der das Regenerieren der mobilen Vorrichtung stattfindet und auf die die mobile Vorrichtung daher durch die Transporteinrichtung gebracht wird. Die schräge Ebene kann eine bessere Zugänglichkeit der Unterseite der mobilen Vorrichtung gewährleisten und damit das Reinigen oder Austauschen eines Wischtextits oder ein anderweitiges Regenerieren erleichtern.

Die motorisch angetriebene Transporteinrichtung der Basisstation beinhaltet mindestens einen, vorzugsweise zwei Hebel, die dazu ausgelegt sind, die mobile Vorrichtung zu greifen. Die gegriffene mobile Vorrichtung wird dann durch die Hebel in die Basisstation hineingezogen oder -gehoben.

Der oder die beiden Hebel sind vorzugsweise mit einem Mechanismus versehen, der an entsprechend ausgestalteten Einrichtungen der mobilen Vorrichtung verrastet, wenn diese gegriffen wird. Dabei soll die Verrastung vorzugsweise im weiteren Verlauf des Transports der mobilen Vorrichtung in die Basisstation wieder gelöst werden, wobei die Hebel auch nach dem Lösen der Verrastung dazu dienen können, den Transportvorgang in der Basisstation zu führen.

Beispielsweise kann es sich bei dem Rastmechanismus um eine federnd gelagerte Stiftkupplung handeln. Die Kupplungsstifte können eine entsprechende Einrichtung hintergreifen und an einem Hinterschnitt verrasten. Vorzugsweise sind die Kupplungsstifte an den Hebeln vorgesehen und die Einrichtung mit dem Hinterschnitt an der mobilen Vorrichtung. Die federnd gelagerten Kupplungsstifte können durch eine weitere mechanische Einrichtung in der Basisstation oder auch durch eine schräge Ebene an der Einrichtung der Basisstation mit dem Hinterschnitt, über welcher schrägen Ebene die Stifte bei Ausübung von entsprechend gerichteten Kräften hochlaufen können, aus der Verrastung gelöst werden. Danach können die Stifte beispielsweise in einer Nut ohne weiteren Hinterschnitt entlanglaufen, um so als Führung zu dienen.

Die Basisstation reinigt die mobile Vorrichtung vorzugsweise dadurch, dass sie sie über eine Auspresswalze führt, durch die die in einem Wischtextil noch enthaltene oder zum Reinigen des Wischtextils zuvor aufgebrachte Reinigungsflüssigkeit aus dem Wischtextil ausgedrückt wird, so dass der damit verbundene Schmutz mit entfernt wird. Sinngemäß gilt dies auch für das Auspressen von Behandlungsflüssigkeiten, die nicht der Reinigung dienen. Die Auspresswalze wird mit einem vorzugsweise einstellbaren Druck auf die mobile Vorrichtung gepresst. Beispielsweise kann die Auspresswalze exzentrisch gelagert sein oder können die Führungseinrichtungen für die mobile Vorrichtung gegenüber der Auspresswalze einstellbar sein.

Ferner ist bevorzugt, das Wischtextil nach dem Auspressen neu mit einer Reinigungsflüssigkeit oder anderer Flüssigkeit zu befeuchten. Bei einer besonderen Ausgestaltung wird dabei Reinigungsflüssigkeit verwendet, die in der Basisstation wieder verwertet wird, also zu einem vorherigen Zeitpunkt bereits ausgepresst wurde. Dabei kann die Basisstation ein Filter, insbesondere ein Durchlauffilter, für die Reinigungsflüssigkeit aufweisen.

Das neue Befeuchten kann zum einen dazu dienen durch ein neues Auspressen die Reinigung zu wiederholen und zu verbessern. Zum Zweiten kann es gewünscht sein, das Wischtextil vor einem neuen Wischen des Fußbodens etwas zu befeuchten oder tatsächlich zu nässen. Bevorzugt ist insbesondere, dass die Reinigungsanlage auch einen zwei- oder mehrstufigen Wischvorgang durchführen kann, indem die mobile Vorrichtung zunächst relativ nass wischt und danach die noch auf dem Fußboden befindliche Flüssigkeit aufnimmt, indem sie eher trocken nachwischt.

Ferner kann die Basisstation mit einer zusätzlichen Einrichtung versehen sein, die ein Auswechseln eines Wischtextils ermöglicht, indem dieses von einem Haftverschluss (sog. Klettverschluss o. ä.) an der mobilen Vorrichtung abgezogen wird. Daraufhin wird mit einem neuen bzw. gereinigten Wischtextil weitergearbeitet, das auf den Haftverschluss wieder aufgebracht wird. Dies geschieht bei dieser Ausgestaltung selbsttätig durch die Basisstation.

Bei der erfindungsgemäßen Anlage können der Verschmutzungsgrad des zu reinigenden Bodens, des verwendeten Wischtextils, der Reinigungsflüssigkeit in der Basisstation und/oder des Filters für die Reinigungsflüssigkeit gemessen und überwacht werden, was vorzugsweise auf optischem bzw. optoelektonischem Weg geschieht.
Im Folgenden wird die Erfindung anhand der Figuren beispielhaft illustriert. Dabei offenbarte Einzelmerkmale können auch in anderen Kombinationen erfindungswesentlich sein. Die Beispiele richten sich, wie bereits erwähnt, sowohl auf erfindungsgemäße Vorrichtungen als auch Verfahren.

Im Einzelnen zeigt:
- Fig. 1: eine Prinzipskizze eines erfindungsgemäßen Schwungmassenantriebs;
- Fig. 2: eine Prinzipskizze einer Variante zu Fig. 1;
- Fig. 3: eine Darstellung einer erfindungsgemäßen Wischvorrichtung mit einem alternativen Schwungmassenantrieb;
- Fig. 4: die Wischvorrichtung aus Fig. 3 in einem anderen Bewegungszustand;
- Fig. 5: eine Alternative zu der Wischvorrichtung aus den Fig. 3 und 4;
- Fig. 6: eine Einzeldarstellung zu den Fig. 3, 4 und 5;
- Fig. 7: eine schematische Darstellung eines weiteren alternativen Schwungmassenantriebs;
- Fig.8: noch eine weitere schematische Darstellung eines alternativen Schwungmassenantriebs;
- Fig. 9: eine Beispiel für einen Radantrieb;
- Fig. 10: eine Aufrissdarstellung einer Wischvorrichtung;
- Fig. 11: eine Prinzipskizze einer erfindungsgemäßen Basisstation;
- Fig. 12: eine genauere Darstellung einer erfindungsgemäßen Basisstation in Seitenansicht;
- Fig. 13: eine Einzeldarstellung zu Fig. 12;
- Fig. 14: eine Schemadarstellung eines weiteren Details zu einer erfindungsgemäßen Basisstation;
- Fig.15: eine Schemadarstellung zu einem weiteren Detail einer erfindungsgemäßen Basisstation.

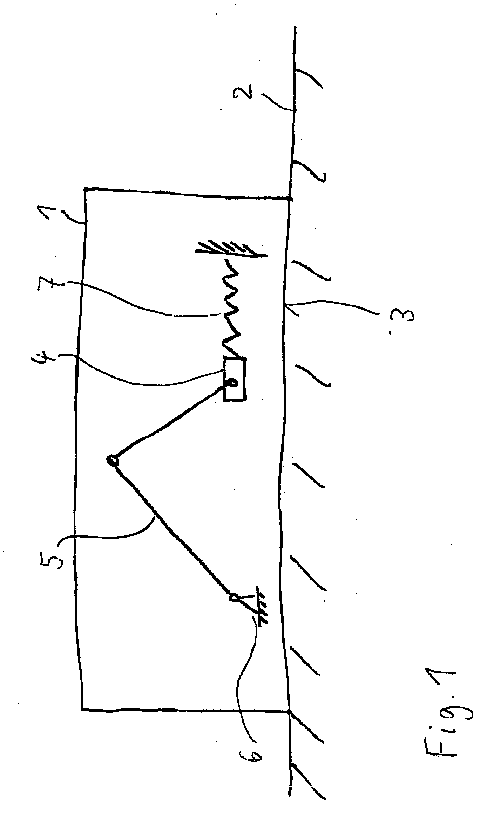

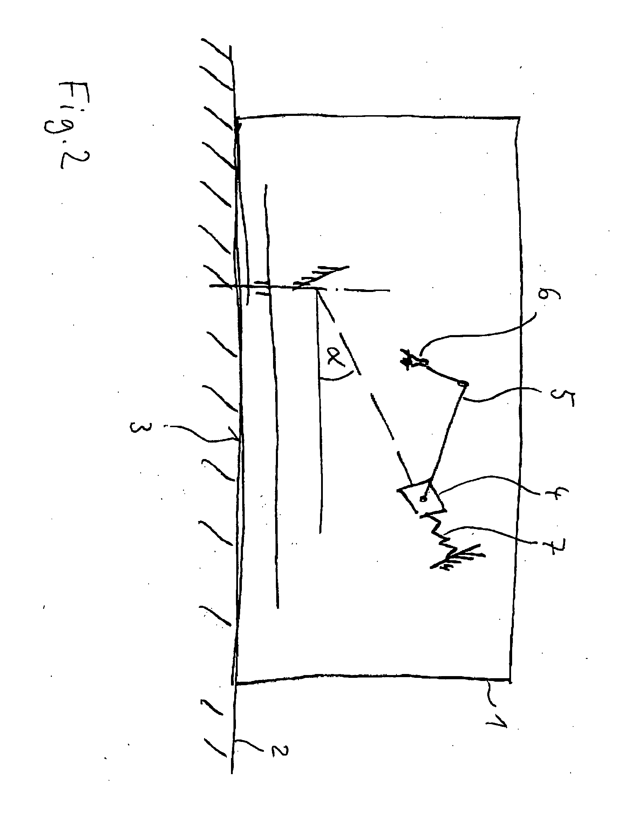

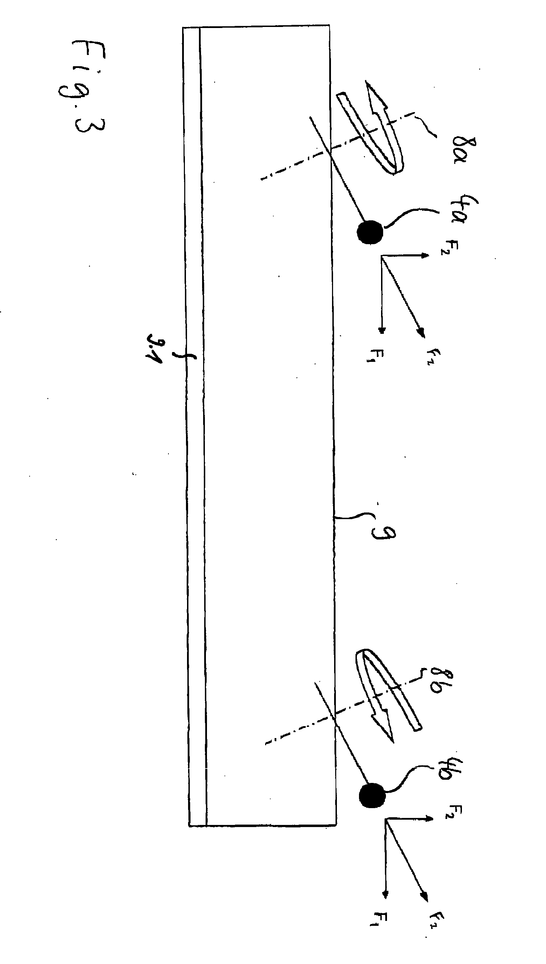

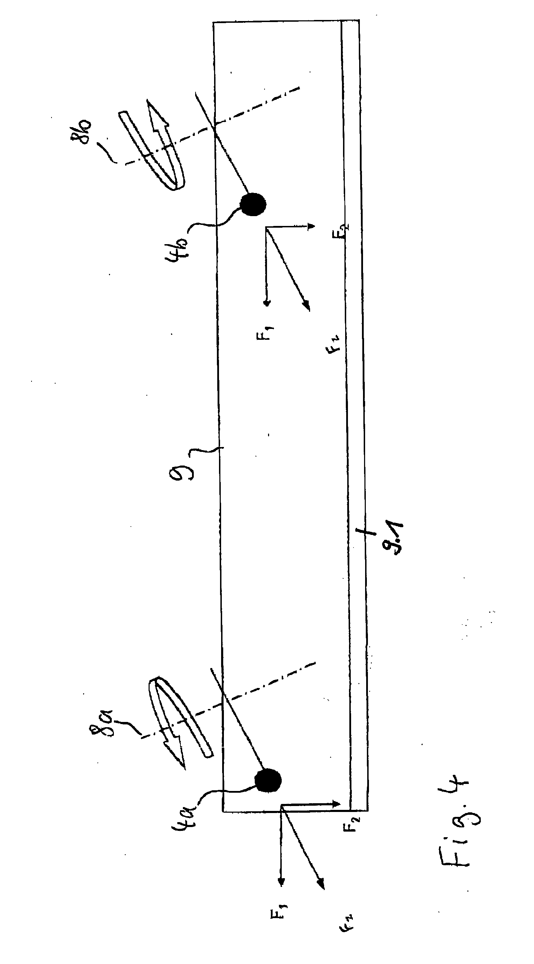

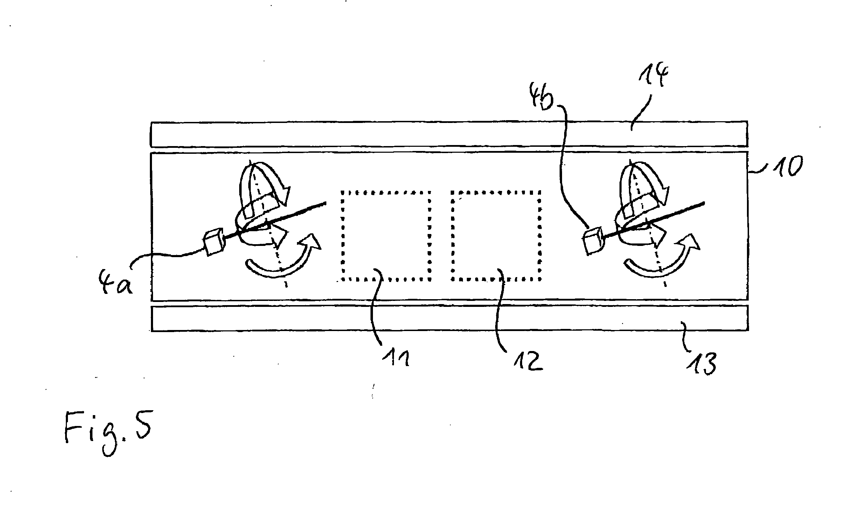

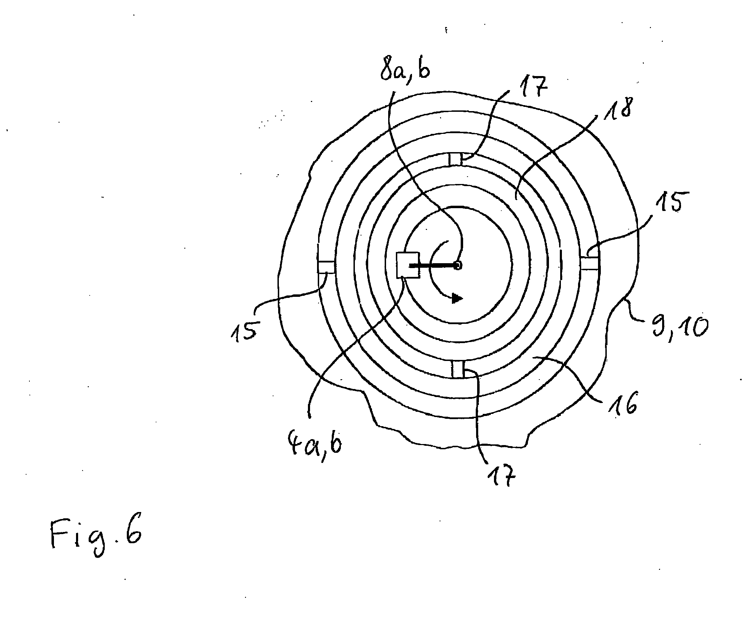

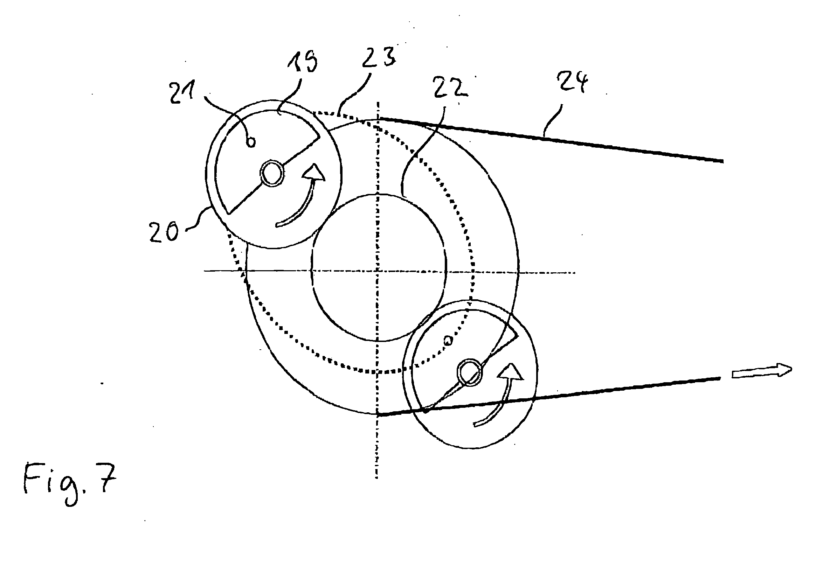

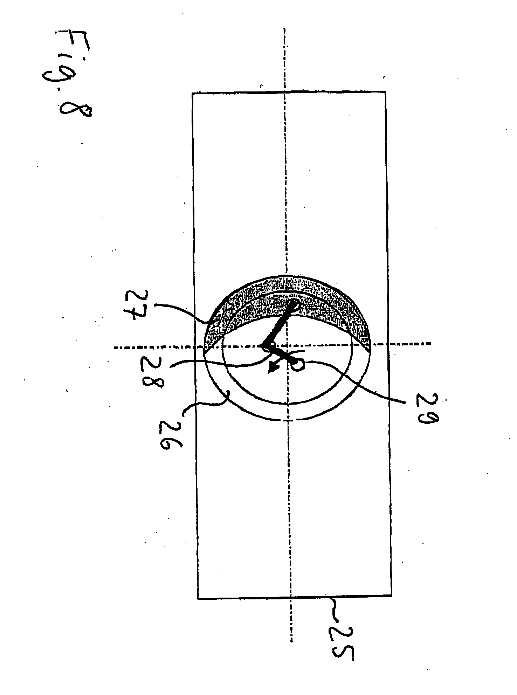

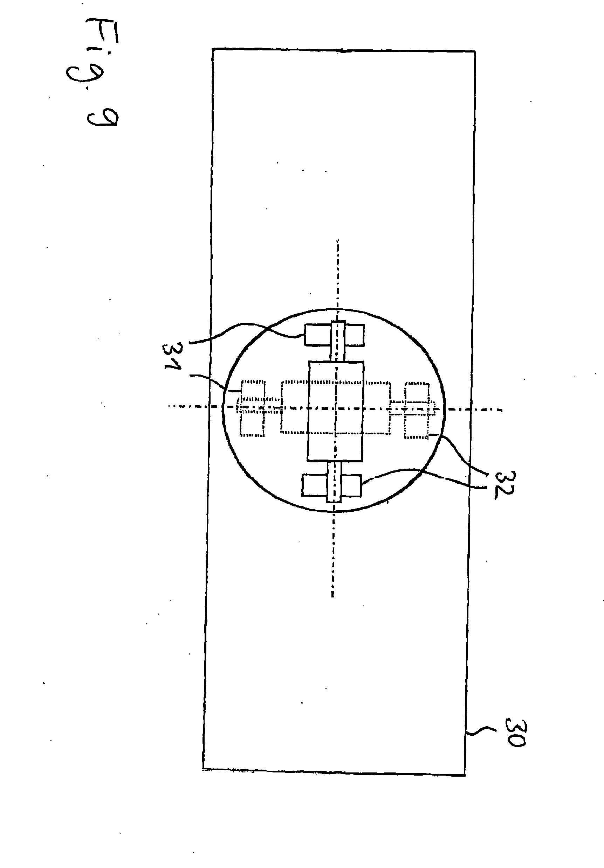

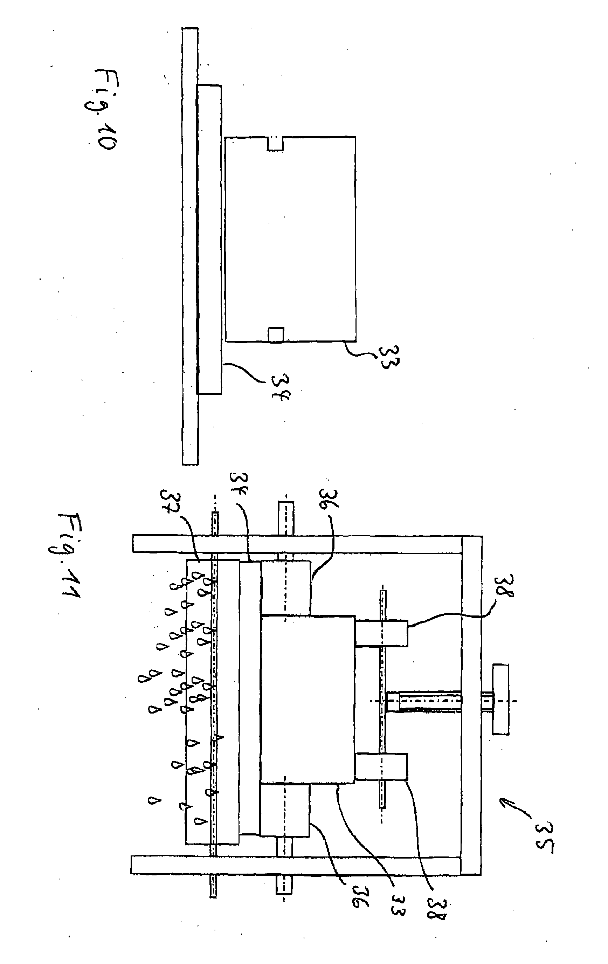

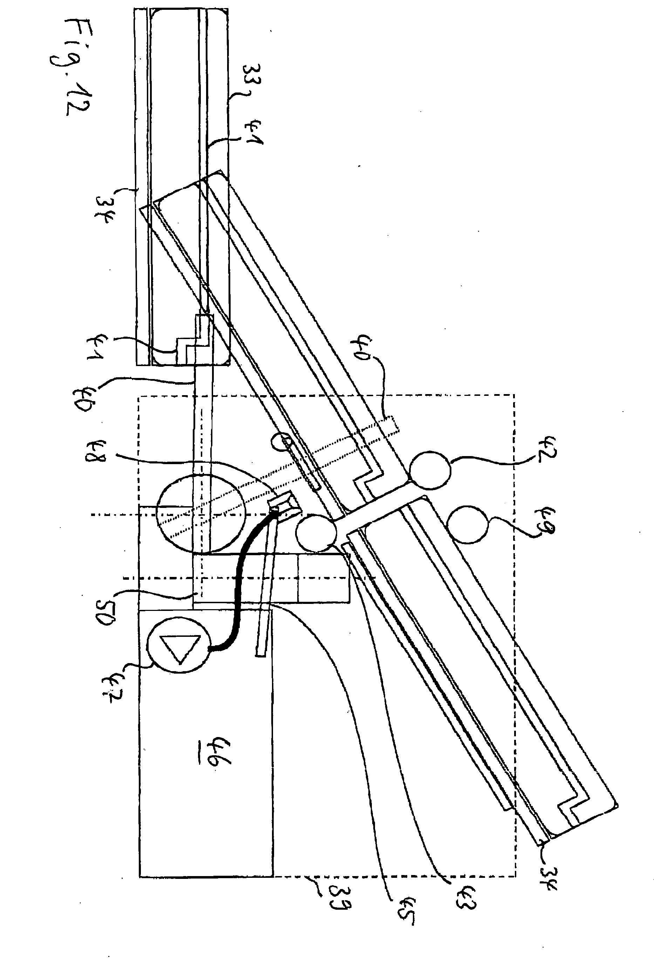

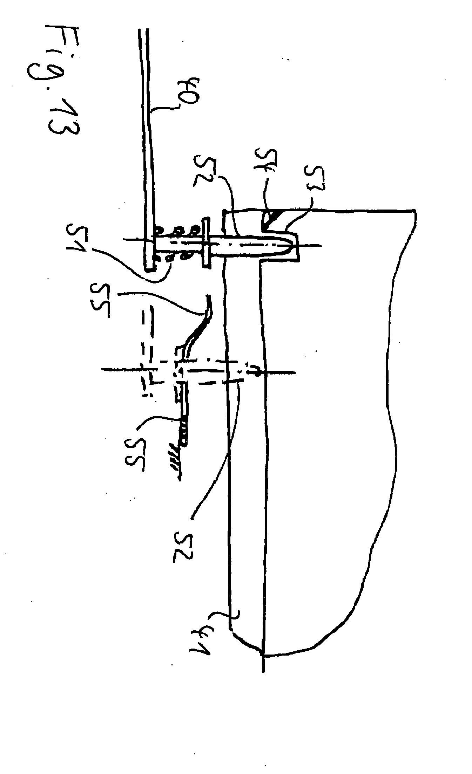

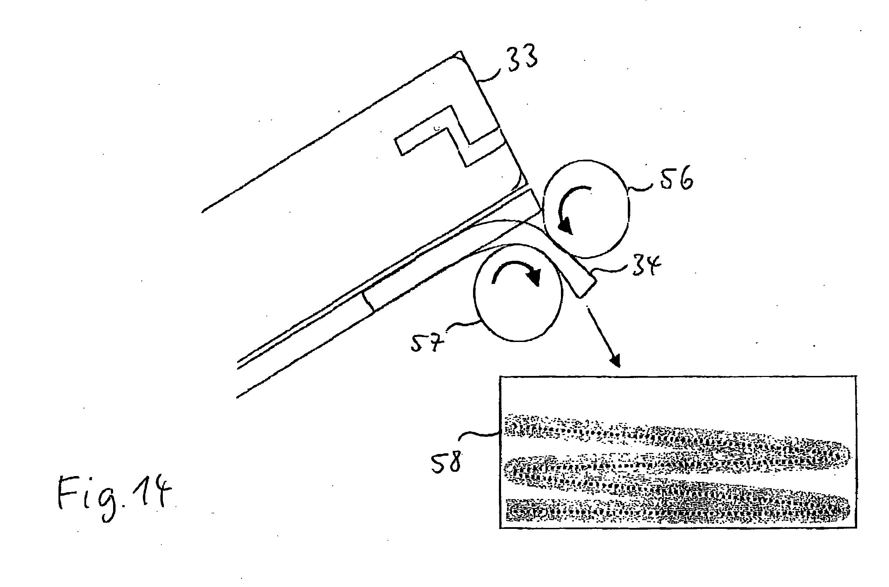

Fig. 1 zeigt eine Prinzipskizze für einen erfindungsgemäßen Schwungmassenantrieb. In Fig. 1 ist mit 1 eine Wischvorrichtung zum feuchten Wischen und damit Reinigen von Fußböden im Haushalt oder in anderen Innenräumen bezeichnet. Sie ist in Fig. 1 als einfacher Quader dargestellt. Die Wischvorrichtung 1 liegt auf einem Fußboden 2 auf und ist diesem mit einer Wischfläche 3 zugewandt.

In der Wischvorrichtung 1 ist eine hier nur symbolisch dargestellte Schwungmasse 4 vorgesehen, die in nicht näher dargestellter Weise horizontal beweglich gelagert ist. Im vorliegenden Fall wird sie über ein ebenfalls nur symbolisches Hebelgestänge 5 von einem Antriebsmotor 6 angetrieben, und zwar gegen die Kraft einer Feder 7. Damit spannt der Antriebsmotor 6 die Feder 7 bis zu einem gewissen Punkt, woraufhin ein Auslösemechanismus die Schwungmasse 4 von der Kraft des Antriebsmotors entkoppelt bzw. den Antriebsmotor 6 freischaltet. Daraufhin kann die Feder 7 die Schwungmasse 4 relativ schnell beschleunigen, und zwar in Fig. 1 nach links gerichtet. Während dieser Beschleunigungsphase ergibt sich damit eine Reaktionskraft auf die Basis, d.h. die übrige Wischvorrichtung 1, die die Wischvorrichtung 1 gegen die Haftreibung zwischen der Wischfläche 3 und dem Fußboden 2 im Sinn der Fig. 1 nach rechts beschleunigt.

Durch die Gleitreibung zwischen der Wischfläche 3 und dem Fußboden 2 wird diese Bewegung nach einer bestimmten Gleitstrecke wieder abgebremst. Ferner hat die Feder 7 die Schwungmasse 4 von sich weg gedrückt, so dass der Antriebsmotor 6 die Schwungmasse 4 wieder über das Hebelgestänge 5 nach rechts bewegen kann, um die Feder 7 zu spannen. Dabei kommt es jedoch zu so kleinen Beschleunigungen der Schwungmasse 4 nach rechts, dass das Spannen der Feder 7 nicht zu einer komplementären ruckartigen Bewegung der Wischvorrichtung 1 nach links führt. Durch iterative Wiederholung des geschilderten Vorgangs rutscht die Wischvorrichtung 1 also unter Überwindung der Haftreibung zwischen der Wischfläche 3 und dem Fußboden 2 stückweise nach rechts. Damit ist an einem Modellbeispiel das Grundprinzip des Schwungmassenantriebs, und zwar insbesondere im Hinblick auf eine lineare Bewegung der Schwungmasse 4, erläutert.

Alternativ könnte die Bewegung der Schwungmasse 4 durch den Antriebsmotor 6 als Schwungmassenbewegung für die Bewegungsphase verwendet werden; die Wischvorrichtung 1 bewegt sich dann also schrittweise nach links. Die Feder 7 wird hier nur als Energiespeicher eingesetzt, um die Schwungmasse 4 wieder in die Ausgangsposition für eine neue Beschleunigung durch den Antriebsmotor 6 zurückzubringen. Die Feder 7 steht dabei stellvertretend für Energiespeicher beliebiger Art, die beispielsweise auch elektrisch (Kondensatoren) sein können. Es soll verdeutlicht werden, dass die Energie für die Rückführung der Bewegung nicht notwendigerweise aus dem Antriebsmotor 6 stammen muss.

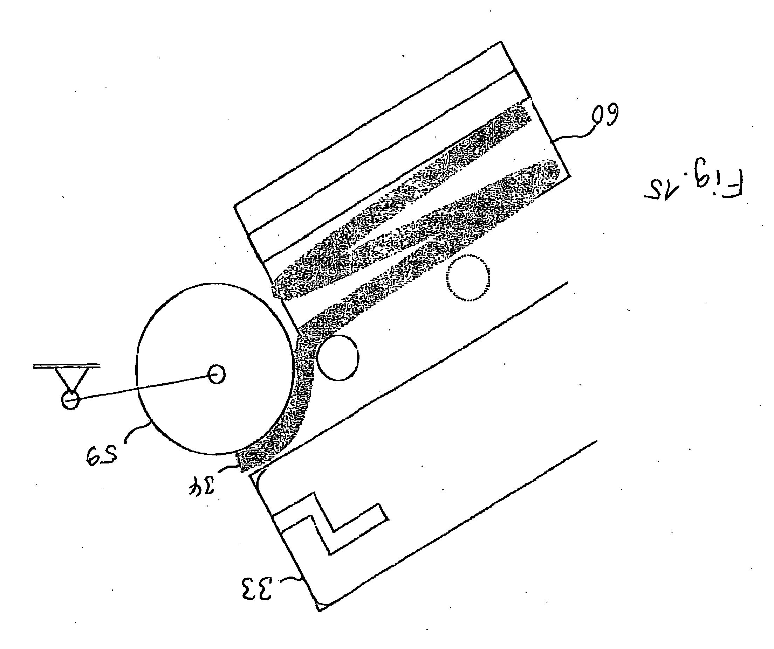

Fig. 2 zeigt einen sehr ähnlichen Modellfall, bei dem die gleichen Bezugszeichen wie in Fig. 1 verwendet werden. Der Unterschied der in Fig. 2 dargestellten Mechanik zu der aus Fig. 1 besteht in der Verkippung der Bewegungsbahn der Schwungmasse 4 gegen die Horizontale um den Winkel α. Dies hat zur Folge, dass bei der Beschleunigung der Schwungmasse 4 durch die Feder 7 auf die Wischvorrichtung 1 eine Reaktionskraft oder auch Rückstoßkraft wirkt, die ebenfalls um den Winkel α gegenüber der Horizontalen verkippt ist. Sie hat also eine der Gravitationskraft entgegen gerichtete Komponente. Auf den Schwerpunkt der Wischvorrichtung 1 wirkt also nicht nur ein nach rechts gerichteter horizontaler Kraftstoß sondern auch ein vertikal nach oben gerichteter Kraftstoß. Anschaulich gesprochen wird die Wischvorrichtung 1 in dieser Bewegungsphase dadurch leichter, d.h. die für die Reibung zwischen der Wischfläche 3 und dem Fußboden 2 wirksame resultierende Kraft wird kleiner. Hiermit soll verdeutlicht werden, dass durch die Auslegung des Schwungmassenantriebs nicht nur durch zeitweise größere und kleinere Verzögerungen und Beschleunigungen sondern auch durch deren Richtung darauf Einfluss genommen werden kann, wann die Haftreibung überwunden wird und wann nicht.

Eine weitere Alternative zu den anhand der Figuren 1 und 2 dargestellten Funktionen besteht darin, die Schwungmasse 4 und die Feder 7 als Linearschwinger durch den Antriebsmotor 6 eine Eigenschwingung ausführen zu lassen, und zwar vorzugsweise in einem resonanznahen Zustand. Bei der um den Winkel α schräggestellten Variante aus Fig. 2 ergeben sich infolge der unterschiedlichen Beeinflussung der Haftreibung in den beiden Umkehrpunkten dieser Schwingung bereits die gewünschten Haftphasen und Gleitbewegungsphasen. Bei der Variante aus Fig. 1 könnte die Schwungmasse 4 beispielsweise an einem der beiden Umkehrpunkte relativ hart abgebremst werden, beispielsweise durch eine nicht-dargestellte elastische Wand oder eine andere vergleichsweise härtere Feder. Dort würden sich dann entsprechend große Verzögerungskräfte ergeben, mit denen die Haftreibung überwunden werden kann.

Fig. 3 verdeutlicht eine andere Ausführungsform eines Schwungmassenantriebs. Hier sind zwei Schwungmassen 4a und 4b vorgesehen, die exzentrisch und drehbar gelagert sind. Mit 8a und 8b sind die Rotationsachsen dieser Drehbewegung bezeichnet. Dabei drehen sich die beiden Schwungmassen 4a und 4b synchron und gegenläufig. Man erkennt, dass die Rotationsebenen und die Rotationsachsen 8a und 8b schräg gestellt sind. Die synchronen Drehbewegungen der Schwungmassen 4a und 4b sind zeitgleich im jeweils obersten (in Fig. 3 dargestellt) und jeweils untersten Scheitelpunkt. Im obersten Scheitelpunkt addieren sich damit die Zentrifugalkräfte mit einer gravitationsvermindernden vertikalen Komponente und einer horizontalen Komponente. Die horizontalen Komponenten sind jeweils mit F₁ und die vertikalen Komponenten jeweils mit F₂ bezeichnet. Die schräg gerichtete Zentrifugalkraft hingegen mit F_{Z}. Die Zentrifugalkräfte können damit die hier mit 9 bezeichnete Wischvorrichtung um eine bestimmte Gleitstrecke nach rechts bewegen. Die Wischvorrichtung 9 besitzt eine Wischfläche 9.1. Im jeweils untersten Scheitelpunkt der Rotationsbahnen der Schwungmassen 4a und 4b addieren sich die Zentrifugalkräfte zwar auch, jedoch verstärken sie hier die bezüglich der Haftreibung wesentliche resultierende Kraft aus Schwerkraft der Wischvorrichtung 9 und vertikaler Komponente der Zentrifugalkräfte. Durch die gegenläufige Rotation der beiden Schwungmassen 4a und 4b kompensieren sich die Trägheitskräfte im übrigen Bereich der jeweiligen Bahnen zumindest teilweise, so dass dort die Haftreibung ebenfalls nicht überschritten wird. Die Gleitphase betrifft vielmehr nur eine bestimmte zeitliche Umgebung des Zustands aus Fig. 3. Bei geeigneter Auslegung, d.h. Abstimmung zwischen den Reibungskoeffizienten, den Massen, Radien und Geschwindigkeiten sowie Bahnverkippungswinkeln der Schwungmassen 4a und 4b kann dabei erreicht werden, dass die Wischvorrichtung 9 in diesen tiefsten Scheitelpunkten infolge der Haftreibung gerade liegen bleibt. Bei dieser Ausführungsform können die iterativen Gleitphasen also durch eine kontinuierliche Kreisbewegung der Schwungmassen erzielt werden.

Fig. 4 zeigt die Stillstandsphase. Hier sind die Schwungmassen im jeweils tiefsten Scheitelpunkt der jeweiligen Kreisbewegung.

Fig. 5 zeigt eine weitere Wischvorrichtung 10 mit einem hier nur symbolisch dargestellten Schwungmassenantrieb, der den Erläuterungen zu den Fig. 3 und 4 entspricht. Symbolisch eingezeichnet sind eine elektronische Steuerung 11 mit einem Mikroprozessor zur Programmsteuerung der Wischvorrichtung, einem Speicher, einer Auswerteeinrichtung für Lage- und Beschleunigungssensoren oder für Kollisionssensoren, die an den Seitenkanten der Wischvorrichtung 10 angeordnet, jedoch nicht eingezeichnet sind, sowie einer Elektronik zur Überwachung der mit 12 bezeichneten Leistungselektronik, die die Lade- und Entladevorgänge von elektrischen Akkumulatoren sowie die motorischen Antriebe der Schwungmassen 4a und 4b steuert. Dem Fachmann sind die elektrotechnischen Einzelheiten einer solchen Steuerung ohne weiteres klar. Der Schwerpunkt der Erfindung liegt hier vielmehr auf der Funktionsweise des Schwungmassenantriebs.

Die Wischvorrichtung 10 aus Fig. 5 zeigt weiterhin nicht nur auf ihrer Unterseite ein Wischtextil 13, dessen Unterseite die momentan eingesetzte Wischfläche bildet, sondern an der Oberseite ein in dem dargestellten Zustand nicht benutztes weiteres Wischtextil 14. Die Wischvorrichtung 10 kann also entweder vom Benutzer mit der Hand oder von einer im weiteren Verlauf noch erläuterten Basisstation umgedreht werden, um mit dem zweiten Wischtextil 14 weiter wischen zu können, wenn das andere Wischtextil verschmutzt oder verbraucht ist. Die hier dargestellte Wischvorrichtung hat dabei ein Zahlenverhältnis der Kanten in der Projektion auf den Fußboden von etwa über 3:1. Damit lassen sich enge Zwischenräume gut reinigen und andererseits auf großen Flächen effektive Bahnbreiten erzielen.

Fig. 6 veranschaulicht in einer Draufsicht eine kardanische Lagerung der Schwungmassen 4a und 4b aus den Fig. 3 bis 5. Mit 9 und 10 ist die "feste" Basis der entsprechenden Wischvorrichtung angedeutet. Die Blickrichtung ist von oben auf die Fußbodenebene gerichtet. Eine erste Drehachse 15 hält einen ersten kardanischen Ring 16, an dem eine zweite Drehachse 17 angebracht ist, die zu der ersten Drehachse 15 um 90° verdreht ist. Die zweite Drehachse 17 hält einen zweiten kardischen Ring 18, an dem die Schwungmasse 4a bzw. 4b um die Rotationsachse 8a bis 8b drehend gelagert ist. Der motorische Antrieb der Schwungmasse 4a bzw. 4b erfolgt vorzugsweise durch in den Kardanlagern vorgesehene Elektromotoren oder aber auch durch flexible Wellen, die von fest an der Basis 9, 10 angebrachten Motoren herangeführt sind, jedoch zeichnerisch nicht dargestellt sind. Die kardanische Lagerung mit den Achsen 15 und 17 kann durch ebenfalls nicht eingezeichnete Servomotoren über Hebelgestänge mit auf den Ringen 16, 18 an den Drehachsen 15 bzw. 17 ansetzenden Hebeln eingestellt werden.

Zusammen mit den Erläuterungen zu den vorangegangenen Fig. 3 bis 5 ergibt sich daraus, dass sich die Wischvorrichtung 9, 10 durch Einstellung der Rotationsgeschwindigkeiten und der Rotationsebenen an verschiedene Reibungsverhältnisse zwischen jeweiligen Wischtextilien oder anderen Wischflächen und verschiedenen Fußböden anpassen kann, selbst wenn diese richtungsabhängig sind. Insbesondere kann die elektronische Steuerung 11 erfassen, wann sich die Wischvorrichtung 9, 10 bewegt und beispielsweise durch zunehmendes Verkippen der Rotationsebenen einen Zustand anstreben, in dem die Haftreibung phasenweise überwunden wird und phasenweise aber noch besteht. Ferner kann sich die Wischvorrichtung 9 und 10 in Folge der kardanischen Lagerung in jeder beliebigen horizontalen Richtung bewegen. Man kann sich im übrigen leicht vorstellen, dass durch getrennte Ansteuerung der Rotationsebenen und/oder der Rotationsphasen der beiden Schwungmassen 4a und 4b auch eine Drehung der Wischvorrichtung 9, 10 um eine vertikale Achse erreicht werden kann, indem etwa die Zentrifugalkräfte der Schwungmassen bei maximaler gravitationsmindernder Vertikalkomponente entgegengerichtet sind oder die Überlagerungen mit der Gravitation auf beiden Seiten unterschiedlich sind. Natürlich lassen sich auch beliebige Überlagerungen aus Drehbewegungen und translatorischen Bewegungen erzielen.

Für einen Drehimpulsantrieb müsste man sich in Fig. 3 und den folgenden Figuren statt der exzentrisch aufgehängten Schwungmassen Kreisel mit konzentrischem Schwerpunkt vorstehen. Deren Drehimpuls könnte beispielsweise im wesentlichen horizontal liegen und durch ruckartige Veränderung gegenüber der ursprünglichen Lage zu einem auf die Basis wirkenden Drehimpuls mit vertikaler Richtung wirken. Dieser vertikale Drehimpuls könnte einen Teil der Wischvorrichtung drehen. Wenn gleichzeitig eine Drehimpulskomponente mit horizontaler Richtung für eine Beschwerung eines Endes sorgt, könnte dieses als Drehachse für eine Schwenkbewegung der Wischvorrichtung dienen. Nachfolgend könnte mit umgekehrter Drehrichtung und am entsprechenden anderen Ende der Wischvorrichtung vorgenommener Beschwerung ein weiterer Schritt getan werden, so dass sich auch hier eine iterative Fortbewegungsmöglichkeit ergibt.

Die beschriebenen Antriebe sind sämtlich innerhalb und dabei über der Wischfläche angeordnet.

Fig. 7 zeigt eine weitere rotatorische Bewegung einer Schwungmasse 19. Die Schwungmasse 19 ist exzentrisch in einem Planetenrad 20 angebracht, wobei der Schwerpunkt mit 21 bezeichnet ist. Das Planetenrad 20 läuft auf einem feststehenden Sonnenrad 22, wobei zwar der Mittelpunkt des Planetenrades eine Kreisbahn beschreibt, der Schwerpunkt 21 jedoch eine gestrichelt eingezeichnete Ellipsenbahn 23. Im vorliegenden Fall kann man sich vorstellen, dass die Drehachse des Planetenrades durch einen mit 24 bezeichneten Riemenantrieb angetrieben ist. Diese Fig. 7 dient nur zur Verdeutlichung der Tatsache, dass sich bereits mit der Bahnkurve des Schwerpunkts der Schwungmasse unterschiedlich große Zentrifugalkräfte zu verschiedenen Zeitpunkten erzielen lassen. Daneben kann die Schwungmasse in ihrer Bahnbewegung natürlich auch in der Bahngeschwindigkeit selbst beschleunigt oder verzögert werden. Zudem kommen die bereits erwähnten Möglichkeiten der gegenseitigen Kompensation von Trägheitskräften zweier oder mehrerer Schwungmassen in Betracht.

Infolge einer Ausrichtung der Längsachse der elliptischen Bahn in Fig. 7 würde sich mit diesem Antrieb bereits ein Trägheitsantrieb auch ohne Schrägstellung der Bahnebene und mit nur einer Schwungmasse 19 erzielen lassen.

Fig. 8 zeigt ein weiteres Beispiel für eine prinzipielle Möglichkeit eines Schwungmassenantriebs. Mit 25 ist symbolisch eine Wischvorrichtung in Draufsicht angedeutet. Darin ist ein Lager 26 vorgesehen, in dem eine exzentrische sichelförmige Schwungmasse 27 rotatorisch geführt ist. Über ein Hebelgestänge (Doppelkurbel mit Gelenk) 28 kann über einen am Punkt 29 angeschlossenen Motor eine Bewegung der Schwungmasse 27 erzielt werden. Diese Bewegung ist bei gleichförmiger Motordrehzahl ungleichmäßig und führt dementsprechend ebenfalls zu einem Trägheitsantrieb der Wischvorrichtung 25 mit Gleitphasen und Haftphasen.

Fig. 9 zeigt einen alternativen Antrieb, also kein Ausführungsbeispiel für einen Schwungmassenantrieb. Hier ist innerhalb einer Wischvorrichtung 30 ein innerhalb der (in der Draufsicht aus Fig. 9 der Wischvorrichtung 30 entsprechenden) Wischfläche angeordneter Radantrieb vorgesehen, bei dem zwei Räder 31 und 32 unabhängig voneinander angetrieben und gegenüber der Wischvorrichtung 30 gedreht werden können. Die Räder sind in zwei verschiedenen Positionen dargestellt, es handelt sich jedoch insgesamt um zwei Räder. Dadurch kann die Wischvorrichtung 30 mit ihrer Wischfläche über den Fußboden transportiert werden, wobei sich durch Drehzahldifferenzen zwischen den Rädern 31 und 32 und durch motorische Einstellung des Winkels der Drehachsen der Räder 31 und 32 relativ zu der Wischvorrichtung 30 beliebige Bewegungsrichtungen und auch Drehungen der Wischvorrichtung 30 um ihre eigene Achse erzielen lassen. Dabei muss darauf geachtet werden, dass der Kraftschluss zwischen den Rädern 31 und 32 und dem Fußboden im Verhältnis zu der Gleitreibung der Wischfläche darauf ausreichend hoch ist.

Fig. 9 verdeutlicht insbesondere, dass auch bei diesem Antrieb eine Anordnung innerhalb der Wischfläche möglich ist und durch die Räder 31 und 32 eventuell verursachte Spuren auf dem Fußboden unabhängig von der Bewegungsrichtung wieder weggewischt werden können. Die Wischfläche ist nämlich eine um den Antrieb herum geschlossene Fläche.

Insbesondere im Zusammenhang mit dem Radantrieb kann vorgesehen sein, die Wischfläche gegenüber dem Antrieb rotierend oder in anderer Weise schwingen zu lassen, um die mechanische Reinigungswirkung zu erhöhen. Dazu kann auch eine Schwungmasse Verwendung finden. Im übrigen können natürlich die Schwungmassenantriebe in den verschiedenen Beispielen entsprechend ergänzt werden.

Fig. 10 zeigt eine Frontansicht einer Wischvorrichtung 33, die ein über den seitlichen Rand der eigentlichen Wischvorrichtung 33 hinausstehendes Wischtextil 34 aufweist. Dieses Wischtextil 34 dient als Kantenschutz und begrenzt im übrigen die Ausmaße der Wischvorrichtung 33 in der Projektion auf den Fußboden. Damit kann insbesondere an Wandkanten entlang besonders effizient gewischt werden, ohne dass die Gefahr von Beschädigungen infolge eines Anstoßens der Wischvorrichtung 33 besteht. Die erfindungsgemäßen Wischvorrichtungen können natürlich auch unabhängig von Wischtextilien entsprechende Anstoßschutzkanten aufweisen, die darüber hinaus auch senorische Aufgaben übernehmen können, um die bereits erwähnte elektronische Steuerung 11 über eine Kollision mit einem Hindernis zu informieren.

Fig. 11 zeigt als Prinzipschema eine in der Blickrichtung von Fig. 10 dargestellte Querschnittsansicht durch eine erfindungsgemäße Basisstation 35 zum Regenerieren der Wischvorrichtung 33. Dabei wird die Wischvorrichtung 33 mit dem Wischtextil 34 zwischen Auspresswalzen 36, 37, 38 hindurch geführt. Der Abstand zwischen Auspresswalzen 36 und 37 bzw. zwischen den Auspresswalzen 38 und 37 ist einstellbar, so dass die Kraft, mit der das Wischtextil 34 ausgepresst wird, in geeigneter Weise bestimmt werden kann. Dabei drücken die Auspresswalzen 38 auf die Wischvorrichtung 33 selbst und die Auspresswalzen 36 auf die überstehenden Ränder des Wischtextils 34, wobei die Auspresswalzen 37 ein Gegenlager bilden. Die ausgepresste Reinigungsflüssigkeit fließt in der angedeuteten Weise nach unten ab.

Fig. 12 zeigt ein etwas konkreteres Ausbildungsbeispiel für die Basisstation, die hier mit 39 bezeichnet ist. Die Wischvorrichtung 33 aus Fig. 10 oder beispielsweise auch die Wischvorrichtung 10 aus Fig. 5 oder die Wischvorrichtung 9 aus Fig. 3 können mit Hilfe ihres eigenen Antriebs in die links in Fig. 12 dargestellte Position gefahren werden. Dort werden sie von zwei Hebeln 40, die motorisch in der eingezeichneten Weise verkippt werden können, gegriffen. Dabei werden im folgenden noch näher erläuterte federnd gelagerte Stifte hinter Hinterschnitten in den in Fig. 12 erkennbaren Nuten 41 an den jeweiligen vorderen Bereichen der Längsseiten der Wischvorrichtung 33 eingerastet. Damit können die Hebel 40 die Wischvorrichtung 33 greifen und in der dargestellten Weise kippend anheben, womit das Vorderende der Wischvorrichtung 33 zwischen Auspresswalzen 42 und 43 geführt wird. Die Auspresswalzen 42 und 43 ziehen die Wischvorrichtung 33 weiter schräg nach oben, wobei die Einführstifte aus den Verrastungen ausklinken und stattdessen in den Nuten 41 als Führung weiterlaufen. Die Wischvorrichtung 33 wird in dieser Weise auf eine schräge Ebene 44 transportiert, wobei die Auspresswalzen 42 und 43 Restfeuchte in dem Wischtextil 34 ausdrücken.

Die ablaufende Reinigungsflüssigkeit fließt durch ein Durchlauffilter 45 in einen Schmutzwasserbehälter 46 ab, von dem die durch das Filter 45 entsprechend gereinigte Reinigungsflüssigkeit mit Hilfe einer Pumpe 47 einer Düse 48 zugeführt wird, die die Reinigungsflüssigkeit zur Verbesserung der Reinigung vor dem Auspressen und/oder beim Zurückfahren der Wischvorrichtung 33 wieder auf das Wischtextil 34 aufsprüht. Der Transport der Wischvorrichtung 33 wird im übrigen durch eine weitere Transportwalze 49 unterstützt. Ferner ist ein Frischwasserbehälter 50 vorgesehen, der beispielsweise für eine Abschlusswischreinigung klares Frischwasser zum Spülen enthält und dementsprechend in nicht dargestellter Weise an die Düse 48 angeschlossen werden kann. Ferner kann die Reinigungsanlage in der bereits beschriebenen Weise ein mehrfaches, zunächst nasses und dann trockeneres Wischen durchführen.

Die schräge Bewegung der Wischvorrichtung 33 auf die Ebene 44 ermöglicht einen einfachen Transport der Wischvorrichtung 33 mit Hilfe der motorisch angetriebenen Hebel 40 in die Basisstation 39. Damit wird die Unterseite und damit das Wischtextil 34 der Wischvorrichtung 33 zugänglich und Platz für die geschilderten Bestandteile unter der Ebene 44 geschaffen. Die hydraulische Einheit am Durchlauffilter 45, Schmutzwasserbehälter 46 und Düse 48 sowie Frischwasserbehälter 50 ist übrigens komplett als Modul entnehmbar.

Auch die Abstände zwischen den Walzen 42 und 49 gegenüber den Walzen 43 sind einstellbar, um ein optimales Auspressen und einen ausreichenden Kraftschluss für den Transport zu gewährleisten. Damit ist im übrigen auch die Restfeuchte in dem Reinigungstextil 34 einstellbar. Die Einstellung kann dabei beispielsweise durch Exzenter in den Drehachsenlagerungen erfolgen.

Fig. 13 verdeutlicht den bereits erwähnten Rastmechanismus zum Greifen der Wischvorrichtung 33 durch die Hebel 40. Links unten ist einer der beiden Hebel 40 zu erkennen, der an seinem Ende einen durch eine Feder 51 federnd gelagerten Stift 52 trägt. Zu beachten ist, dass die Fig. 13 gegenüber der Fig. 12 seitenverkehrt ist. Man erkennt, dass die bereits erwähnte Nut 41 in ihrem Anfangsbereich, also in der Nähe ihres in Fig. 12 rechten und in Fig. 13 linken Endes einen Hinterschnitt 53 aufweist, in den der Stift 52 einrasten kann. Das Einrasten wird durch eine Schräge 54 am Anfang der Nut 41 erleichtert. Das Ausrasten aus dem Hinterschnitt kann entweder durch eine ähnliche Schräge mit Hilfe der durch die Auspresswalzen 42 und 43 ausgeübten Kräfte oder mit Hilfe einer weiteren mechanischen Auskupplung erfolgen, die hier durch die motorisch angetriebene Gabel 55 angedeutet ist. Diese kann den Stift 52 greifen und nach außen aus dem Hinterschnitt 53 herausziehen. Im folgenden gleitet der Stift 52 dann entlang der Nut 41 als Führung.

Es gibt natürlich auch andere Möglichkeiten, die Wischvorrichtung 33 motorisch angetrieben in eine Basisstation zu transportieren, etwa durch Portale, Krane, Aufzüge, Kettenantriebe, Seilzüge und dgl. Insbesondere kann eine Basisstation auch dazu ausgelegt sein, eine Wischvorrichtung mit zwei Wischtextilien (vgl. Fig. 5) um 180° zu drehen.

Fig. 14 zeigt schematisch, dass die Basisstation 39 ggf. in einer zweiten Abteilung auch zum Auswechseln des Wischtextils 34 dienen kann. Fig. 14 zeigt, wie das Wischtextil 34 von zwei Walzen 56 und 57 von nicht näher dargestellten Klettverschlüssen an der Unterfläche der Wischvorrichtung 33 abgezogen und in einen Behälter 58 abgelegt wird. Fig. 15 zeigt umgekehrt, wie das oder ein frisches Wischtextil 34 durch eine Andruckwalze 59 aus einem Behälter 60 entnommen und auf den Haftverschluss aufgebracht werden kann. Bei beiden Vorgängen findet ein den Erläuterungen zu Fig. 12 vergleichbarer Transport der Wischvorrichtung 33 in schräger Richtung statt. Es kann auch eine den Erläuterungen zu Fig. 12 entsprechende Hebelmechanik eingesetzt werden.

Die Steuerung der verschiedenen motorisch betätigten Bewegungsschritte in der Basisstation 39 kann durch Lichtschranken oder ähnliche Sensoren erfolgen. Sobald die Wischvorrichtung 33 gegriffen ist, können aber auch die typischen Stromverläufe der beteiligten Elektromotoren verwendet werden, um Rückschlüsse auf die jeweiligen Bewegungsphasen zu ziehen.

Ferner können, wie bereits früher erwähnt, optische Bewertungen des Verschmutzungsgrades des Bodens, des Wischtextils, der Reinigungsflüssigkeit in dem Wischtextil oder auch in dem Behälter 46, des Verschmutzungsgrades des Filters 45 und Ähnliches verwendet werden.

Ferner kann die Basisstation 39 programmierbar sein, um bestimmte Restfeuchten, Reinigungszyklen, Wischtextildaten und ähnliches einzugeben. Wischtextilien können im übrigen auch Transponder enthalten, die in der Basisstation ausgelesen werden.

Die elektronische Steuerung 11 der Wischvorrichtung, die ggf. auch durch eine elek-tronische Steuerung der Basisstation umprogrammiert werden kann, kann die Wischvorrichtung (in welcher konkreten Bauform auch immer) unter Berücksichtigung bekannter oder bei früheren Fahrten ermittelter Daten von Raumabmessungen und Fußbodenmerkmalen steuern. Auch der Benutzer kann die zu reinigenden Räume angeben und damit bekannte Datensätze aufrufen bzw. wesentliche Merkmale solcher Räume eingeben. Im Übrigen kann die Wischvorrichtung eine automatische Positionsbestimmung, etwa durch bekannte odometrische Verfahren, durchführen, indem die Bewegungsstrecken und Bewegungsrichtungen ermittelt und damit die aktuellen Positionen bestimmt werden. Eine Positionsbestimmung kann natürlich auch in einer anderen Weise, beispielsweise durch Lasermesssysteme, erfolgen.

Die Wischfahrten sind vorzugsweise S-förmig mit vorzugsweise gleicher vorne liegender Längskante. Damit lassen sich mit wenigen Fahrten und geringer Überlappung der erfassten Bahnbreiten große Flächen reinigen. Durch die bereits beschriebene Bewegung mit immer gleich bleibender vorne liegender Kante wird im Übrigen vermieden, dass in Kurven oder Ecken Schmutzstreifen abgelegt werden.

## Patentansprüche

1. Vorrichtung mit einer Basis (1, 9, 10, 25, 30, 33) und einem Antrieb (4 bis 7, 19, 26 bis 29, 31, 32) zum Bewegen der Vorrichtung (1, 9, 10, 25, 30, 33) über eine Oberfläche (2), bei der
der Antrieb (4 bis 7, 19, 26 bis 29, 31, 32) eine relativ zu der Basis (1, 9, 10, 25, 30, 33) bewegbare und motorisch angetriebene Schwungmasse (4, 19, 27) aufweist und
dazu ausgelegt ist, die Vorrichtung (1, 9, 10, 25, 30, 33) durch Bewegen der Schwungmasse (4, 19 ,27) relativ zu der Basis (1, 9, 10, 25, 30, 33) anzutreiben, indem bei einem Teil dieser Bewegungen eine die Vorrichtung (1, 9, 10, 25, 30, 33) auf der Oberfläche (2) haltende Haftreibung durch Massenträgheit der Schwungmasse (4, 19, 27) überwunden wird und bei einem anderen Teil dieser Bewegungen nicht, **dadurch gekennzeichnet, dass**
die Bewegungen der Schwungmasse (4, 19, 27) relativ zu der Basis (1, 9, 10, 25, 30, 33) insgesamt iterativ sind, und
der Antrieb (4 bis 7, 19, 26 bis 29, 31, 32) derart ausgelegt ist, dass zu der Oberfläche (2) senkrechte Trägheitskraftkomponenten aus den Bewegungen der Schwungmasse (4, 19, 27) zur Beeinflussung der Haftreibung genutzt werden.

2. Vorrichtung nach Anspruch 1, bei der die Bewegungen der Schwungmasse (4) relativ zu der Basis (1) linear sind.

3. Vorrichtung nach Anspruch 2, bei der die Schwungmasse (4) mit einem Energiespeicher (7) gekoppelt ist, der dazu ausgelegt ist, Energie aus den Bewegungen aufzunehmen und in die Bewegungen abzugeben.

4. Vorrichtung nach Anspruch 1, bei der die Bewegungen der Schwungmasse (4, 19, 27) relativ zu der Basis (9, 10, 25, 30, 33) rotatorisch sind.

5. Vorrichtung nach Anspruch 4, bei der die Bewegungen kreisförmig sind.

6. Vorrichtung nach Anspruch 4 oder 5, bei der der Schwerpunkt der bewegten Schwungmasse (4, 19, 27) bezüglich der rotatorischen Bewegungen exzentrisch liegt und der Antrieb (4, 19, 26 bis 29, 31, 32) die Zentrifugalkräfte der Schwungmasse (4, 19, 27) in der rotatorischen Bewegung nutzt.

7. Vorrichtung nach Anspruch 4, bei der der Schwerpunkt der bewegten Schwungmasse bezüglich der rotatorischen Bewegungen konzentrisch liegt und der Antrieb den Drehimpuls der Schwungmasse in der rotatorischen Bewegung nutzt.

8. Vorrichtung nach einem der vorstehenden Ansprüche, bei der die Neigung einer Bahn der Schwungmassenbewegung einstellbar ist.

9. Vorrichtung nach Anspruch 8, bei der die Schwungmasse (4) kardanisch an der Basis aufgehängt ist.

10. Vorrichtung nach Anspruch 9, bei der die kardanische Aufhängung (15 bis 18) motorisch verstellbar ist.

11. Vorrichtung nach einem der vorstehenden Ansprüche mit zwei relativ zu der Basis (9) bewegbaren und motorisch angetriebenen Schwungmassen (4a, 4b).

12. Vorrichtung nach Anspruch 10 und Anspruch 11, bei der die beiden Schwungmassen (4a, 4b) gegenläufig rotieren.

13. Vorrichtung nach einem der vorstehenden Ansprüche, bei der die Bewegung über gerade Strecken durch schrittweise translatorische Einzelbewegungen erfolgt.

14. Vorrichtung nach einem der vorstehenden Ansprüche, bei der die Bewegung der Vorrichtung über gerade Strecken durch schrittweise rotatorische Einzelbewegungen mit alternierenden Rotationsrichtungen und -achsen erfolgt.

15. Vorrichtung nach einem der vorstehenden Ansprüche, die eine Behandlungsvorrichtung für Böden (2) ist.

16. Vorrichtung nach Anspruch 15 zum Wischen von flachen Oberflächen (2) mit einer Wischfläche (3), wobei der Antrieb (4 bis 7, 19, 26 bis 29, 31, 32) bei einer Bewegung der Vorrichtung (1, 9, 10, 25, 30, 33) durch den Antrieb (4 bis 7, 19, 26 bis 29, 31, 32) innerhalb einer durch die Wischfläche (3) erfassten Bahnbreite liegt.

17. Anlage zum Behandeln von Böden mit einer mobilen Vorrichtung (1, 9, 10, 25, 30, 33) nach einem der vorstehenden Ansprüche und mit einer Basisstation (35, 39) zum Regenerieren der mobilen Vorrichtung (1, 9, 10, 25, 30, 33), wobei die Basisstation (35, 39) eine motorisch angetriebene Transporteinrichtung (40, 42 bis 44, 49) aufweist, die dazu ausgelegt ist, die mobile Vorrichtung (1, 9, 10, 25, 30, 33) für das Regenerieren in die Basisstation (35, 39) hinein zu transportieren und aus der Basisstation (35, 39) hinaus zu transportieren.

18. Verfahren zum Bewegen einer Vorrichtung nach einem der Ansprüche 1 bis 16 über eine Oberfläche (2), bei dem eine relativ zu der Basis (1, 9, 10, 25, 30, 33) bewegbare Schwungmasse (4, 19, 27) motorisch angetrieben wird, und zwar in solcher Weise, dass bei einem Teil dieser Bewegungen eine die Vorrichtung (1, 9, 10, 25, 30, 33) auf der Oberfläche haltende Haftreibung durch Massenträgheit der Schwungmasse (4, 19, 27) überwunden wird und bei einem anderen Teil dieser Bewegungen nicht, wobei die Vorrichtung (1, 9, 10, 25, 30, 33) durch iterative Bewegungen der Schwungmasse (4, 19, 27) relativ zu der Basis (1, 9, 10, 25, 30, 33) über die Oberfläche bewegt wird.
